# EUROPEAN PATENT SPECIFICATION

(11) **EP 2 517 909 B1**
(45) Date of publication and mention of the grant of the patent: **14.05.2014**
(21) Application number: 12002990.5
(22) Date of filing: 27.04.2012
(51) Int. Cl.: B60H 1/24

(54) **An air curtain, and a vehicle provided with such an air curtain**
Luftvorhang und ein Fahrzeug mit einem solchen Luftvorhang
Rideau d'air et un véhicule équipé d'un tel rideau d'air

(30) Priority: 29.04.2011 NL 1038785
(43) Date of publication of application: 31.10.2012
(73) Proprietor: H.OPDAM MANAGEMENT B.V., 1075 BW Amsterdam (NL)
(72) Inventor: Opdam, Joannes Jozef Gerardus, 1075 BW Amsterdam (NL); Quaak, Peter, 3524 RW Utrecht (NL)
(74) Representative: Altenburg, Bernardus Stephanus Franciscus

(56) References cited:
- DE-U1- 20 201 148
- FR-A1- 2 902 700
- FR-A1- 2 914 229
- GB-A- 2 286 856
- US-A- 5 788 568
- US-B1- 6 442 957

## Description

The present invention relates to an air curtain comprising a longitudinally extending frame comprising
- a longitudinally extending air inlet opening; and
- a longitudinally extending air outlet;
wherein there is a row of electrical fans between the longitudinally extending air outlet and the longitudinally extending air inlet opening for introducing air into the air curtain and expelling it through the longitudinally extending air outlet for generating an air-curtain.

It is well-known to use a vehicle, such as a truck or a trailer to transport freight that has to be kept cool, or even frozen. It is also possible that the cargo has to be kept at a higher temperature than the ambient temperature, e.g. above freezing point in cold climates. It is known in the art to provide such vehicles with an air curtain, which is a device for providing a downward flow of air near the access opening of a cargo space so as to reduce the ingress of ambient air when the cargo door is open. Thus a significant saving in energy can be achieved. In case of perishable freight, the air curtain may prevent perishing, avoiding significant financial loss. The downward flow of air generated by an air curtain is also called an air curtain. To avoid ambiguity, in the present application the flow of air will be written with a hyphen as air-curtain. The better the air curtain works, i.e. longer the distance over which there is a (laminar) downward flow of air towards the floor and preferably to the floor of the cargo space, the more it helps to ensure that the cargo remains at the desired temperature and energy for cooling (or perhaps heating) is saved by reducing the ingress of ambient air. It goes without saying that the energy consumptio of the air curtain should be relatively modest.

The problem with an air curtain is that to provide an even, downward flow of air an air outlet is required that extends over a relatively long distance downwardly. In the cargo space of a vehicle, such a relatively high air curtain would hinder stacking and/or loading. Also, being positioned near the entrance of the cargo space, the air curtain is susceptible to damage, for example by a fork-lift truck.

The object of the present invention is to provide an air curtain for a vehicle that allows for a relatively low height of the air curtain.

To this end, an air curtain according to the preamble is characterized in that an air diffuser is provided between the electrical fans and the longitudinally extending air outlet.

A row of electrical fans distributed over the length of the longitudinally extending air outlet allows for a homogenous air speed distribution along the length of the longitudinally extending air outlet. The use of the air diffuser results in a more homogenous air-curtain extending over a long distance from the longitudinally extending air outlet. The air diffuser is for example a metal grid. In general, the air curtain will comprise a housing so as to define an air chamber between a longitudinally extending air inlet opening and a longitudinally extending air outlet. The housing may constitute the frame, or part thereof. The electrical fans will be fans that are customarily used in computers. The dimensions of such computer fans are small, reducing the height of the air curtain. A typical height of suitable fans is 9 cm or less, this height including the housing of the fan, if any.

US5788568 discloses a fan comprising blowing units incorporated into a casing to generate an air flow from an inlet towards the nozzles. In order to equalize the air curtain, the output of the blowing units can be set differently or the said blowing unit can be located at different heights. However, in order to equalize said air curtain, at least 3 blowing units are required.

According to a preferred embodiment, there are at least 6 electrical fans per meter of the longitudinally extending air outlet and preferably at least 8.

This allows for a homogenous air speed distribution along the length of the longitudinally extending air outlet. In practice, the number of electrical fans will be 10 or more per m.

According to a preferred embodiment, the electrical fans have a spacing of less than 5 cm, preferably less than 3 cm between each other, and more preferably less than 1 cm.

This results in a very homogenous air-curtain extending over a long distance. It is most preferred that the electrical fans are immediately adjacent to each other.

According to a preferred embodiment, the plane of rotation of the electrical fans is at an angle to the direction of the flow path defined by the air outlet.

This reduces the height taken up by the air curtain. The angle (in a plane perpendicular to both the plane of the air-curtain produced by the air curtain and the longitudinal direction of the row of electrical fans) will be less than 60°, such as between 30° and 60°.

According to a preferred embodiment, downstream of an electrical fan there is an air diffuser having i) an central inlet opening downstream of the center of the electrical fan and ii) a central outlet opening, the ratio of the surface area of the central inlet opening to the surface area of the central outlet opening >1.1, defining a convergent flow path, and a second flow path downstream of the electrical fan bypassing said convergent flow path and merging with the convergent flow path before the longitudinally extending air outlet.

An electrical fan produces an air stream which is resembles a hollow cylinder of moving air. By having provided a diffuser with a central inlet opening capable of collecting part of the moving air, like the inner cylindrical section of the hollow cylinder, the remaining air will pass around the central inlet opening and slows down in a diverging path because the surface area of the central outlet opening is smaller. Similarly, the air passed through the central inlet opening will be sped up because it passes the air diffuser via a convergent path. For optimum results, the diffuser will be designed such that both air speeds are substantially the same downstream of the air diffuser. The central opening of the diffuser may be a single opening for more than one electrical fan, in which case the air from the electrical fans will flow in part above and below the diffuser and for the remaining part through the central opening.

According to a preferred embodiment, the air curtain comprises curved baffles for guiding air from a first direction determined by at least one of the electrical fan and a housing of the air curtain to a second direction defined by at least one of the housing of the air curtain and the outlet opening of the air curtain.

Such baffles will help to combat turbulence and help to maintain laminar flow in bends of the flow path of air through the air curtain. It has been found that such baffles may reduce the power consumption by the electrical fans significantly (in one instance by over 10%) which is very important for operating the air curtain on the battery of a vehicle such as a truck when the engine is not running to avoid local air polution.

The present invention also relates to vehicle comprising an air curtain, wherein the air curtain is an air curtain as disclosed above.

The present invention also relates to an air curtain comprising a longitudinally extending frame comprising
- a longitudinally extending air inlet opening; and
- a longitudinally extending air outlet;
wherein there is a row of electrical fans between the longitudinally extending air outlet and the longitudinally extending air inlet opening for introducing air into the air curtain and expelling it through the longitudinally extending air outlet for generating an air-curtain.

It is well-known to use a vehicle, such as a truck or a trailer to transport freight that has to be kept cool, or even frozen. It is also possible that the cargo has to be kept at a higher temperature than the ambient temperature, e.g. above freezing point in cold climates. It is known in the art to provide such vehicles with an air curtain, which is a device for providing a downward flow of air near the access opening of a cargo space so as to reduce the ingress of ambient air when the cargo door is open. Thus a significant saving in energy can be achieved. In case of perishable freight, the air curtain may prevent perishing, avoiding significant financial loss. The downward flow of air generated by an air curtain is also called an air curtain. To avoid ambiguity, in the present application the flow of air will be written with a hyphen as air-curtain. The better the air curtain works, i.e. longer the distance over which there is a (laminar) downward flow of air towards the floor and preferably to the floor of the cargo space, the more it helps to ensure that the cargo remains at the desired temperature and energy for cooling (or perhaps heating) is saved by reducing the ingress of ambient air. It goes without saying that the energy consumptio of the air curtain should be relatively modest.

The problem with an air curtain is that to provide an even, downward flow of air an air outlet is required that extends over a relatively long distance downwardly. In the cargo space of a vehicle, such a relatively high air curtain would hinder stacking and/or loading. Also, being positioned near the entrance of the cargo space, the air curtain is susceptible to damage, for example by a fork-lift truck.

The object of the present invention is to provide an air curtain for a vehicle that allows for a relatively low height of the air curtain.

To this end, an air curtain according to the preamble is characterized in that the plane of rotation of the electrical fans is at an angle to the direction of the flow path defined by the air outlet .

This reduces the height taken up by the air curtain. The angle (in a plane perpendicular to both the plane of the air-curtain produced by the air curtain and the longitudinal direction of the row of electrical fans) will be less than 60°, such as between 30° and 60° . A row of electrical fans distributed over the length of the longitudinally extending air outlet allows for a homogenous air speed distribution along the length of the longitudinally extending air outlet. In general, the air curtain will comprise a housing so as to define an air chamber between a longitudinally extending air inlet opening and a longitudinally extending air outlet. The housing may constitute the frame, or part thereof. The electrical fans will be fans that are customarily used in computers. The dimensions of such computer fans are small, reducing the height of the air curtain. A typical height of suitable fans is 9 cm or less, this height including the housing of the fan, if any.

US5788568 discloses a fan comprising blowing units incorporated into a casing to generate an air flow from an inlet towards the nozzles, the casing having one end opened to form the inlets and the opposite end opened to form the nozzles.

According to a favourable embodiment, there are at least 6 electrical fans per meter of the longitudinally extending air outlet and preferably at least 8.

This allows for a homogenous air speed distribution along the length of the longitudinally extending air outlet. In practice, the number of electrical fans will be 10 or more per m.

According to a favourable embodiment, the electrical fans have a spacing of less than 5 cm, preferably less than 3 cm between each other, and more preferably less than 1 cm.

This results in a very homogenous air-curtain extending over a long distance. It is most preferred that the electrical fans are immediately adjacent to each other.

According to a favourable embodiment, an air diffuser is provided between the electrical fans and the longitudinally extending air outlet.

This results in a more homogenous air-curtain extending over a long distance from the longitudinally extending air outlet. The air diffuser is for example a metal grid.

According to a favourable embodiment, downstream of an electrical fan there is an air diffuser having i) an central inlet opening downstream of the center of the electrical fan and ii) a central outlet opening, the ratio of the surface area of the central inlet opening to the surface area of the central outlet opening >1.1, defining a convergent flow path, and a second flow path downstream of the electrical fan bypassing said convergent flow path and merging with the convergent flow path before the longitudinally extending air outlet.

An electrical fan produces an air stream which is resembles a hollow cylinder of moving air. By having provided a diffuser with a central inlet opening capable of collecting part of the moving air, like the inner cylindrical section of the hollow cylinder, the remaining air will pass around the central inlet opening and slows down in a diverging path because the surface area of the central outlet opening is smaller. Similarly, the air passed through the central inlet opening will be sped up because it passes the air diffuser via a convergent path. For optimum results, the diffuser will be designed such that both air speeds are substantially the same downstream of the air diffuser. The central opening of the diffuser may be a single opening for more than one electrical fan, in which case the air from the electrical fans will flow in part above and below the diffuser and for the remaining part through the central opening.

According to a favourable embodiment, the air curtain comprises curved baffles for guiding air from a first direction determined by at least one of the electrical fan and a housing of the air curtain to a second direction defined by at least one of the housing of the air curtain and the outlet opening of the air curtain.

Such baffles will help to combat turbulence and help to maintain laminar flow in bends of the flow path of air through the air curtain. It has been found that such baffles may reduce the power consumption by the electrical fans significantly (in one instance by over 10%) which is very important for operating the air curtain on the battery of a vehicle such as a truck when the engine is not running to avoid local air polution.

Finally, the present invention relates to vehicle comprising an air curtain, wherein the air curtain is an air curtain as in claims 8 to 13.

The present invention will now be illustrated with reference to the drawing where
Fig. 1 shows a side view of a vehicle with a cargo space, the cargo space being in a partial cut-out view;
Fig. 2 shows an air curtain visible in fig. 1 in detail;
Fig. 3 shows a front view of a row of fans of the air curtain of Fig. 2;
Fig. 4 shows a cross-sectional view of an alternative air curtain with tilted fans;
Fig. 5 shows a cross-sectional view of an alternative air curtain with a diffuser;
Fig. 6 shows a perspective view of the diffuser of Fig. 5; and
Fig. 7 shows the air curtain of fig. 2, a unit having air outlet channels being tilted.

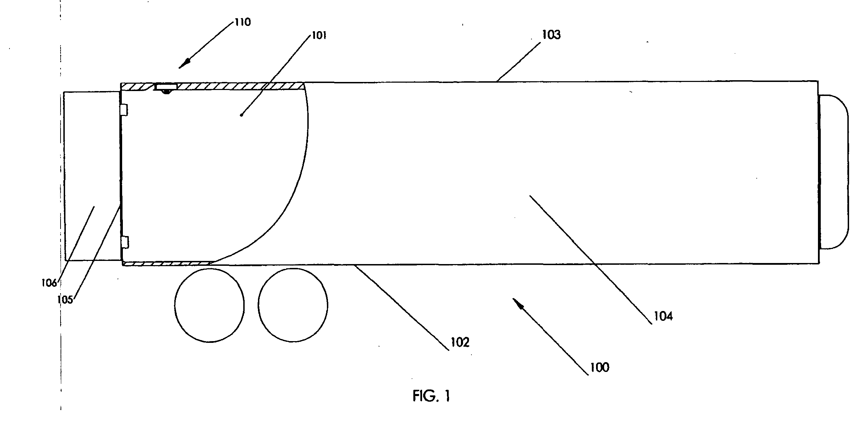

Fig. 1 shows a vehicle, in particular a trailer 100 with a cargo space 101 defined by a floor 102, a ceiling 103, and (four) sidewalls 104. One of the sidewalls (in this case as is usual the wall at the back of the vehicle) is provided with an access opening 105 that can be closed with a cargo door 106. As such, the vehicle is as common as it gets. However, the trailer 100 is provided with an air curtain 110. This air curtain 110 extends over the entire width of the cargo space 101 so as to provide an air-curtain over the width and height of the cargo space 101.

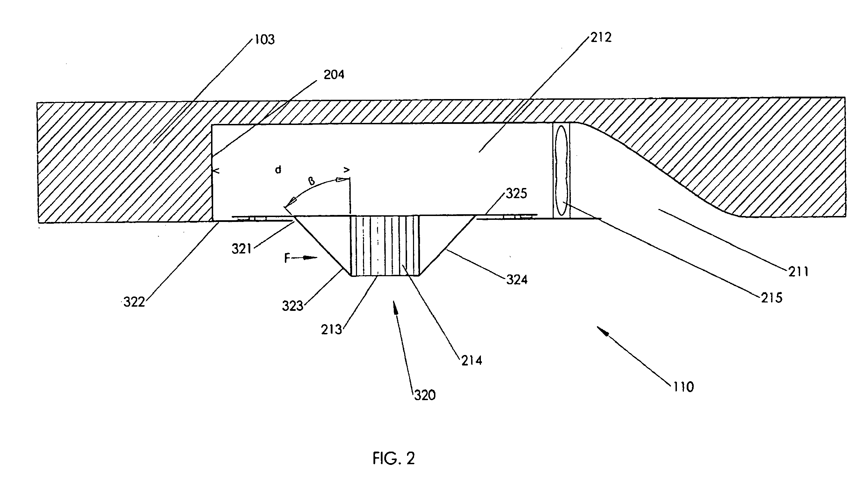

Now reference is made to Fig. 2, a mirror image of a detail of Fig. 1. The ceiling 103 is an insulated ceiling comprising polystyrene foam having a thickness of 10 cm. Part of this foam has been removed to make room for an air curtain 110 comprising an inlet opening 211 facing the access opening 105, an air chamber 212 and an outlet opening 213 (the reference line of 213 ends at the distal end of the unit 320 discussed below). The outlet opening 213 comprises a multitude of parallel tubes (defining straight channels with a path length of 5 cm) 214, the centerlines of said tubes 214 being perpendicular to the floor 102. A row of computer fans 215 extending over the length of the air curtain 110 (and hence over the width of the cargo space 101) draw in ambient air via the inlet opening 211, introducing it into the air chamber 212 from which it flows through the parallel tubes 214 out of the outlet opening 213, creating in effect a vertical air-curtain.

To improve the quality of the air-curtain, the volume of the air chamber is increased by the distance d from a back wall 204 of the air curtain 110 being spaced horizontally by at least 2 cm from the outlet opening 213.

The parallel tubes 214 are part of a unit 320 that in use (and as shown in fig. 2) is seated in an opening 321 of the bottom 322 of the air curtain 110. The unit 320 has two bevelled sides 323, 324, that allow the unit 320 to be taken up inside the air chamber 212 if a force (arrow F) is exerted inadvertently on the unit 320, e.g. if a pallet loaded with parcels is moved out of the cargo space 101. It will return to its proper position for generating an air-curtain once the pallet is removed from the cargo space 101. This set-up also allows the cargo space 101 to be filled with cargo against the ceiling 103, without the air curtain 110 being in the way.

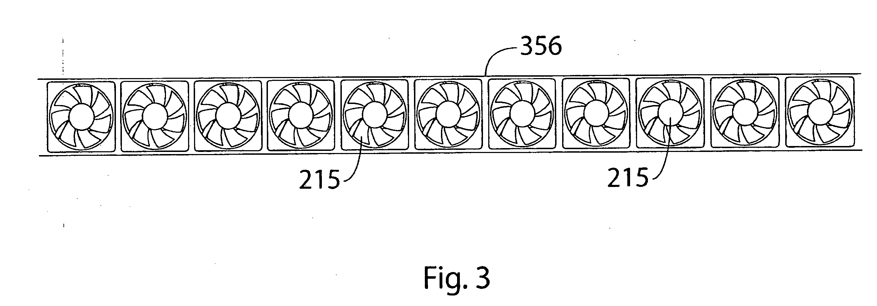

Fig. 3 shows a partial rear-view of the air curtain 110 of Fig. 2. The fans 215 are positioned as a row of fans 215 in housing 356 of the air curtain 110. The housing 356 serves as a frame for the air curtain 110.

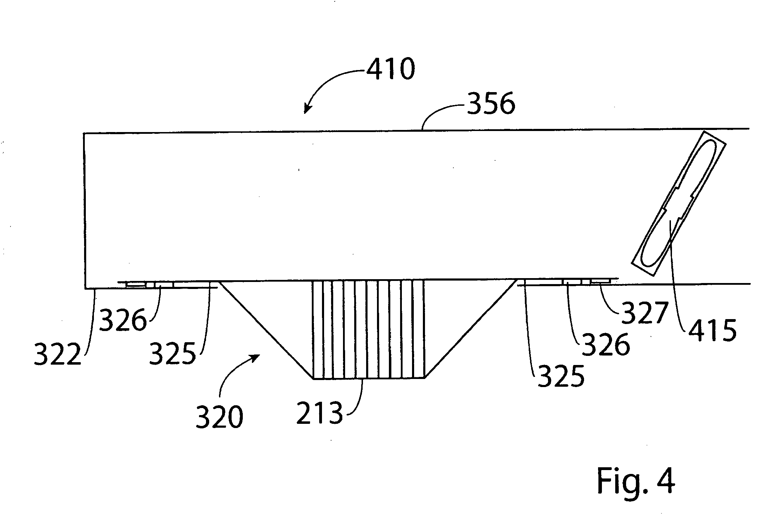

Fig. 4 shows an air curtain 410 which basically corresponds to air curtain 110, except that the fans 415 are in a tilted position. In the embodiment shown, the air curtain 410 has flanges 325 that in the seated position will rest on the bottom 322 of the air curtain. To avoid noise from the unit 320 due to vibrations of the trailer 100 while moving, rubber pads 326 may be provided which should provide a seal so as to avoid air from leaking out of the air chamber 212. Also, magnets 327 may be used to keep the unit 320 seated.

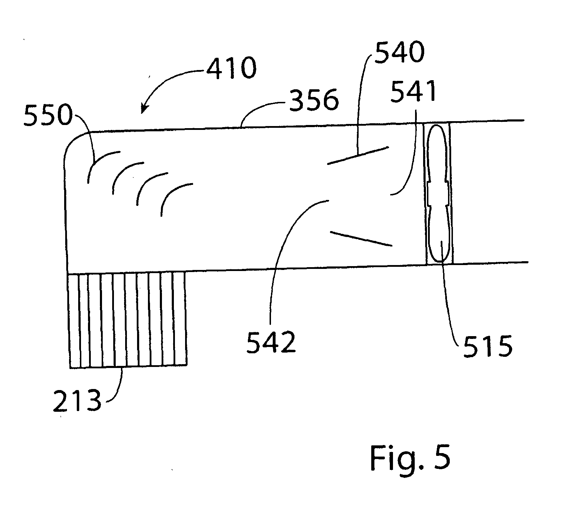

Fig. 5 shows a cross-sectional view of an alternative air curtain 410 comprising a housing 356, an electrical fan 515 and an outlet opening 213 comprising a multitude of parallel tubes (defining straight channels with a path length of 5 cm) 214.

The air curtain 410 comprises a diffuser 540 comprising a central inlet opening 541 and a central outlet opening 542. The surface area of the former is larger than that of the latter. This helps to speed up the air entering the central inlet opening 541.

Air passing between the diffuser 540 and the housing 356 (second flow path that bypasses the flow path between the central inlet opening 541 and a central outlet opening 542) is slowed down, because the upstream surface area provided by the diffuser 540 outside the central inlet opening 541 is smaller than the surface area left by the central outlet opening 541. This slows air passing around the central outlet opening 541 down.

To smoothly guide the air from the diffuser 540, consisting of two elongated strips extending over the width of the air curtain, to the outlet opening 213, curved baffles 550 are provided. Dimensioning of the central inlet opening 541 and a central outlet opening 542 is preferably done such that the speed of the air leaving the central outlet opening 542 is substantial equal to the speed of air having bypassed the path through the central outlet opening 542, i.e. where the two flow paths meet. This allows for an air curtain having a reduced length.

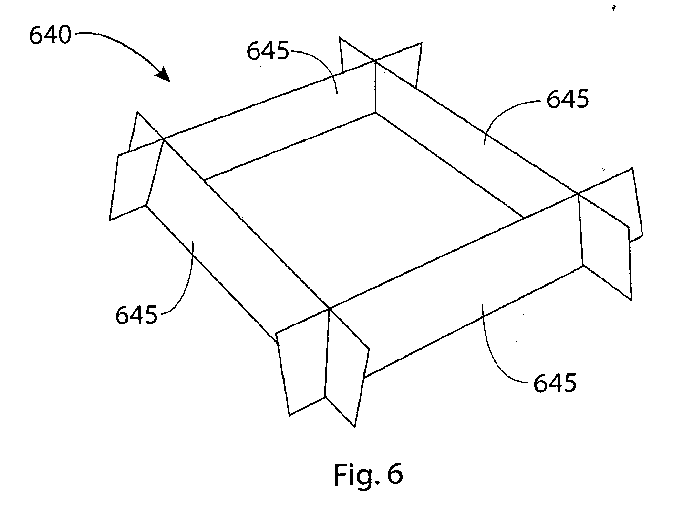

Fig. 6 shows an alternative diffuser 640 for a single electrical fan, built using 4 rectangular aluminium platelets 645, angled to form a frusto-pyramdal cone. A multitude of such diffusers 640 would be placed inside the air curtain.

The present invention is not limited by the above embodiments and can be varied within the scope of the claims. The row of electrical fans is not necessarily on a straight line, but may for example be placed on a curved line, such as a circle segment. This allows for an increase of the number of electrical fans, and hence an increased air speed from the outlet. For the same reason, the outlet opening will generally be linear. In general, an outlet opening will have a width of at least 2 cm, preferably at least 3 cm such as at least 4 cm.

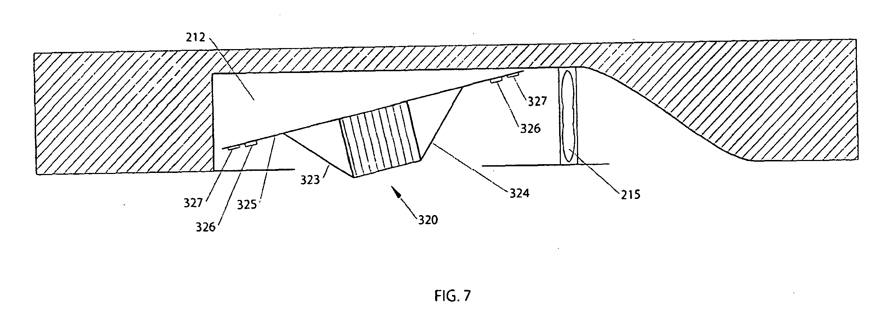

The parallel tubes 214 are part of a unit 320 that in use (and as shown in fig. 2) is seated in an opening 321 of the bottom 322 of the air curtain 110. The unit 320 has two beveled sides 323, 324, that allow the unit 320 to be taken up inside the air chamber 212 if a force (arrow F) is exerted inadvertently on the unit 320, e.g. if a pallet loaded with parcels is moved out of the cargo space 101. Fig. 7. shows the unit 320 while unseated. It will return to its proper position for generating an air-curtain once the pallet is removed from the cargo space. This set-up also allows the cargo space 101 to be filled with cargo against the ceiling 103, without the air curtain being in the way.

In the embodiment shown, the unit 320 has flanges 325 that in the seated position will rest on the bottom 322 of the air curtain. To avoid noise from the unit 320 due to vibrations of the trailer 100 while moving, rubber pads 326 may be provided which should provide a seal so as to avoid air from leaking out of the air chamber 212. Also, magnets 327 may be used to keep the unit 320 seated. This embodiment allows for easy inspection of the fans 215, as the unit 320 may be tilted on purpose as shown in fig. 7.

The beveled sides 323, 324 do not necessarily have to be in contact with the walls defining the air outlet at the distal end of the unit 320, so here they do not have to be in contact with the parallel tubes 214. This provides further protection against damage, because deformation of the parallel tubes 214 could reduce the proper generation of an air-curtain.

## Claims

1. An air curtain (110) comprising a longitudinally extending frame comprising
- a longitudinally extending air inlet opening (211); and
- a longitudinally extending air outlet (213);
wherein there is a row of electrical fans (215) between the longitudinally extending air outlet (213) and the longitudinally extending air inlet opening (211) for introducing air into the air curtain (110) and expelling it through the longitudinally extending air outlet (213) for generating an air-curtain, **characterized in that** an air diffuser is provided between the electrical fans (215) and the longitudinally extending air outlet (213) .

2. The air curtain (110) according to claim 1, wherein there are at least 6 electrical fans (215) per meter of the longitudinally extending air outlet and preferably at least 8.

3. The air curtain (110) according to claim 2, wherein the electrical fans have a spacing of less than 5 cm, preferably less than 3 cm between each other, and more preferably less than 1 cm.

4. The air curtain (110) according to any of the preceding claims, wherein the plane of rotation of the electrical fans (215) is at an angle to the direction of the flow path defined by the air outlet (213) .

5. The air curtain (110) according to any of the preceding claims, wherein downstream of an electrical fan (215) there is an air diffuser having i) an central inlet opening downstream of the center of the electrical fan (215) and ii) a central outlet opening, the ratio of the surface area of the central inlet opening to the surface area of the central outlet opening >1.1, defining a convergent flow path, and a second flow path downstream of the electrical fan (215) bypassing said convergent flow path and merging with the convergent flow path before the longitudinally extending air outlet (213).

6. The air curtain (110) according to any of the preceding claims, wherein the air curtain comprises curved baffles for guiding air from a first direction determined by at least one of the electrical fan and a housing of the air curtain to a second direction defined by at least one of the housing of the air curtain and the outlet opening of the air curtain.

7. Vehicle comprising an air curtain, **characterized in that** the air curtain is an air curtain as claimed in one of the previous claims.

8. An air curtain (110) comprising a longitudinally extending frame comprising
- a longitudinally extending air inlet opening (211); and
- a longitudinally extending air outlet (213);
wherein there is a row of electrical fans (215) between the longitudinally extending air outlet (213) and the longitudinally extending air inlet opening (211) for introducing air into the air curtain (110) and expelling it through the longitudinally extending air outlet (213) for generating an air-curtain, **characterized in that** the plane of rotation of the electrical fans (215) is at an angle to the direction of the flow path defined by the air outlet (213) .

9. The air curtain (110) according to claim 8, wherein there are at least 6 electrical fans (215) per meter of the longitudinally extending air outlet and preferably at least 8.

10. The air curtain (110) according to claim 9, wherein the electrical fans have a spacing of less than 5 cm, preferably less than 3 cm between each other, and more preferably less than 1 cm.

11. The air curtain (110) according to any of the claims 8 to 10, wherein an air diffuser is provided between the electrical fans (215) and the longitudinally extending air outlet (213).

12. The air curtain (110) according to claim 11, wherein downstream of an electrical fan (215) there is an air diffuser having i) an central inlet opening downstream of the center of the electrical fan (215) and ii) a central outlet opening, the ratio of the surface area of the central inlet opening to the surface area of the central outlet opening >1.1, defining a convergent flow path, and a second flow path downstream of the electrical fan (215) bypassing said convergent flow path and merging with the convergent flow path before the longitudinally extending air outlet (213).

13. The air curtain (110) according to any of the claims 8 to 12, wherein the air curtain comprises curved baffles for guiding air from a first direction determined by at least one of the electrical fan and a housing of the air curtain to a second direction defined by at least one of the housing of the air curtain and the outlet opening of the air curtain.

14. Vehicle comprising an air curtain, **characterized in that** the air curtain is an air curtain as claimed in one of the claims 8 to 13.

## Patentansprüche

1. Ein Luftvorhang (110), welcher einen in Längsrichtung sich erstreckenden Rahmen beinhaltet, umfassend
- eine in Längsrichtung sich erstreckende Einlassöffnung (211) für Luft; und
- einen in Längsrichtung sich erstreckenden Luftauslass (213);
wobei eine Reihe elektrischer Lüfter (215) zwischen dem in Längsrichtung sich erstreckenden Luftauslass (213) und der in Längsrichtung sich erstreckenden Einlassöffnung (211) angeordnet ist, um Luft in den Luftvorhang (110) einzubringen und durch den in Längsrichtung sich erstreckenden Luftauslass (213) herauszubringen, um einen Luftvorhang zu erzeugen, **dadurch gekennzeichnet, dass** ein Luftverteiler zwischen den elektrischen Lüftern (215) und dem in Längsrichtung sich erstreckenden Luftauslass (213) angeordnet ist.

2. Der Luftvorhang (110) nach Anspruch 1, wobei mindestens sechs elektrische Lüfter (215) pro Meter des in Längsrichtung sich erstreckenden Luftauslasses pro Meter vorgesehen sind, bevorzugterweise jedoch mindestens acht.

3. Der Luftvorhang (110) nach Anspruch 2, wobei die elektrischen Lüfter einen Abstand von weniger als 5 cm voneinander besitzen, besser weniger als 3 cm voneinander und bevorzugterweise weniger als 1 cm.

4. Der Luftvorhang (110) nach einem der vorangegangenen Ansprüchen, wobei die Rotationsebene der elektrischen Lüfter (215) in Bezug auf die Strömungsrichtung, welche durch den Luftauslass (213) definiert wird, abgewinkelt angeordnet ist.

5. Der Luftvorhang (110) nach einem der vorangegangenen Ansprüchen, wobei ablaufseitig eines elektrischen Lüfters (215) ein Luftverteiler angeordnet ist, welcher i) eine zentrale Einlassöffnung ablaufseitig vom Mittelpunktes des elektrischen Lüfters (215) besitzt und ii) eine zentrale Auslassöffnung besitzt, wobei das Verhältnis des Oberflächenbereichs der zentralen Einlassöffnung zum Oberflächenbereich der zentralen Auslassöffnung >1,1 ist und einen zusammenlaufenden Luftstrom definiert, und wobei ein zweiter Luftstrom in ablaufseitig des elektrischen Lüfters (215) den besagten zusammenlaufenden Luftstrom umgeht und sich mit dem zusammenlaufenden Luftstrom vor dem in Längsrichtung sich erstreckenden Luftauslass (213) verbindet.

6. Der Luftvorhang (110) nach einem der vorangegangenen Ansprüchen, wobei der Luftvorhang gebogene Leitbleche umfasst, um Luft aus einer ersten Richtung, welche durch mindestens einen der elektrischen Lüfter und ein Gehäuse des Luftvorhanges bestimmt wird, zu einer zweiten Richtung, welche durch mindestens ein Gehäuse des Luftvorhangs und den Luftauslass des Luftvorhangs bestimmt wird, zu leiten.

7. Fahrzeug, welches einen Luftvorhang umfasst, **dadurch gekennzeichnet, dass** der Luftvorhang ein Luftvorhang nach einem der vorangegangenen Ansprüchen ist.

8. Ein Luftvorhang (110), welcher einen in Längsrichtung sich erstreckenden Rahmen beinhaltet, umfassend
- eine in Längsrichtung sich erstreckende Einlassöffnung (211) für Luft; und
- einen in Längsrichtung sich erstreckenden Luftauslass (213);
wobei eine Reihe elektrischer Lüfter (215) zwischen dem in Längsrichtung sich erstreckenden Luftauslass (213) und der in Längsrichtung sich erstreckenden Einlassöffnung (211) angeordnet ist, um Luft in den Luftvorhang (110) einzubringen und durch den in Längsrichtung sich erstreckenden Luftauslass (213) herauszubringen, um einen Luftvorhang zu erzeugen, **dadurch gekennzeichnet, dass** die Rotationsebene der elektrischen Lüfter (215) in Bezug auf den Strömungsweg, welcher durch den Luftauslass (213) definiert wird, abgewinkelt angeordnet ist.

9. Der Luftvorhang (110) nach Anspruch 8 , wobei mindestens sechs elektrische Lüfter (215) pro Meter des in Längsrichtung sich erstreckenden Luftauslasses pro Meter vorgesehen sind, bevorzugterweise jedoch mindestens acht.

10. Der Luftvorhang (110) nach Anspruch 9, wobei die elektrischen Lüfter einen Abstand von weniger als 5 cm voneinander besitzen, besser weniger als 3 cm voneinander und bevorzugterweise weniger als 1 cm.

11. Der Luftvorhang (110) nach einem der Ansprüche 8 bis 10, wobei ein Luftverteiler zwischen den elektrischen Lüftern (215) und dem in Längsrichtung sich erstreckenden Luftauslass (213) angeordnet ist.

12. Der Luftvorhang (110) nach Anspruch 11, wobei in ablaufseitig eines elektrischen Lüfters (215) ein Luftverteiler angeordnet ist, welcher i) eine zentrale Einlassöffnung ablaufseitig vom Mittelpunktes des elektrischen Lüfters (215) besitzt und ii) eine zentrale Auslassöffnung besitzt, wobei das Verhältnis des Oberflächenbereichs der zentralen Einlassöffnung zum Oberflächenbereich der zentralen Auslassöffnung >1,1 ist und einen zusammenlaufenden Luftstrom definiert, und wobei ein zweiter Luftstrom ablaufseitig des elektrischen Lüfters (215) den besagten zusammenlaufenden Luftstrom umgeht und sich mit dem zusammenlaufenden Luftstrom vor dem in Längsrichtung sich erstreckenden Luftauslass (213) verbindet.

13. Der Luftvorhang (110) nach einem der Ansprüche 8 bis 12, wobei der Luftvorhang gebogene Leitbleche umfasst, um Luft aus einer ersten Richtung, welche durch mindestens einen der elektrischen Lüfter und ein Gehäuse des Luftvorhanges bestimmt wird, zu einer zweiten Richtung, welche durch mindestens ein Gehäuse des Luftvorhangs und den Luftauslass des Luftvorhangs bestimmt wird, zu leiten.

14. Fahrzeug, welches einen Luftvorhang umfasst, **dadurch gekennzeichnet, dass** der Luftvorhang ein Luftvorhang nach einem der Ansprüche 8 bis 13 ist.

## Revendications

1. Un rideau d'air (110) comprenant une structure s'étendant longitudinalement, qui comprend :
- une ouverture (211) d'entrée d'air s'étendant longitudinalement ; et
- une sortie d'air (213) s'étendant longitudinalement ;
dans lequel une rangée de ventilateurs électriques (215) est placée entre la sortie d'air (213) s'étendant longitudinalement et l'ouverture (211) d'entrée d'air s'étendant longitudinalement pour introduire de l'air dans le rideau d'air (110) et pour l'expulser à travers la sortie d'air (213) s'étendant longitudinalement afin de générer un rideau d'air, **caractérisé en ce qu'**un diffuseur d'air est placé entre les ventilateurs électriques (215) et la sortie d'air (213) s'étendant longitudinalement.

2. Le rideau d'air (110) selon la revendication 1, dans lequel il y a au moins six ventilateurs électriques (215) par mètre de la sortie d'air s'étendant longitudinalement, et de préférence au moins huit.

3. Le rideau d'air (110) selon la revendication 2, dans lequel les ventilateurs électriques présentent un espacement de moins de 5 cm, de préférence de moins de 3 cm entre les uns et les autres, et plus préférablement de moins de 1 cm.

4. Le rideau d'air (110) selon l'une quelconque des revendications précédentes, dans lequel le plan de rotation des ventilateurs électriques (215) forme un angle par rapport à la direction de l'écoulement défini par la sortie d'air (213).

5. Le rideau d'air (110) selon l'une quelconque des revendications précédentes, dans lequel, en aval d'un ventilateur électrique (215), se trouve un diffuseur d'air ayant : i) une ouverture centrale d'entrée en aval du centre du ventilateur électrique (215) et ii) une ouverture centrale de sortie, le rapport entre la surface de l'ouverture centrale d'entrée et la surface de l'ouverture centrale de sortie étant inférieur à 1,1, définissant un trajet d'écoulement convergent, et un deuxième trajet d'écoulement en aval du ventilateur électrique (215), formant une dérivation dudit trajet d'écoulement convergent et se fusionnant avec le trajet d'écoulement convergent avant la sortie d'air (213) s'étendant longitudinalement.

6. Le rideau d'air (110) selon l'une quelconque des revendications précédentes, dans lequel le rideau d'air comporte des déflecteurs incurvés pour guider l'air depuis une première direction déterminée par au moins un des ventilateurs électriques et un boîtier du rideau d'air, vers une deuxième direction définie par au moins un des boîtiers du rideau d'air et par l'ouverture de sortie que comprend le rideau d'air.

7. Véhicule comprenant un rideau d'air, dans lequel le rideau d'air est un rideau d'air selon l'une quelconque des revendications précédentes.

8. Un rideau d'air (110) comprenant une structure s'étendant longitudinalement, qui comprend :
- une ouverture (211) d'entrée d'air s'étendant longitudinalement, et
- une sortie d'air (213) s'étendant longitudinalement ;
dans lequel une rangée de ventilateurs électriques (215) est placée entre la sortie d'air (213) s'étendant longitudinalement et l'ouverture (211) d'entrée d'air s'étendant longitudinalement pour introduire de l'air dans le rideau d'air (110) et l'expulser à travers la sortie d'air (213) s'étendant longitudinalement afin de générer un rideau d'air, **caractérisé en ce que** le plan de rotation des ventilateurs électriques (215) forme un angle avec la direction du trajet d'écoulement défini par la sortie d'air (213).

9. Le rideau d'air (110) selon la revendication 8, dans lequel il y a au moins six ventilateurs électriques (215) par mètre de la sortie d'air s'étendant longitudinalement, et de préférence au moins huit.

10. Le rideau d'air (110) selon la revendication 9, dans lequel les ventilateurs électriques ont un espacement de moins de 5 cm, de préférence de moins de 3 cm entre les uns et les autres, et plus préférablement de moins de 1 cm.

11. Le rideau d'air (110) selon l'une quelconque des revendications 8 à 10, dans lequel un diffuseur d'air est placé entre les ventilateurs électriques (215) et la sortie d'air (213) s'étendant longitudinalement.

12. Le rideau d'air (110) selon la revendication 11, dans lequel, en aval d'un ventilateur électrique (215), se trouve un diffuseur d'air ayant : i) une ouverture centrale d'entrée en aval du centre du ventilateur électrique (215) et ii) un ouverture centrale de sortie, le rapport entre la surface de l'ouverture centrale d'entrée et la surface de l'ouverture centrale de sortie étant inférieur à 1,1, définissant un trajet d'écoulement convergent, et un deuxième trajet d'écoulement en aval du ventilateur électrique (215), formant une dérivation dudit trajet d'écoulement convergent et se fusionnant avec le trajet d'écoulement convergent avant la sortie d'air (213) s'étendant longitudinalement.

13. Le rideau d'air (110) selon l'une quelconque des revendications 8 à 12, dans lequel le rideau d'air comporte des déflecteurs incurvés pour guider l'air depuis une première direction déterminée par au moins un des ventilateurs électriques et un boîtier du rideau d'air, vers une deuxième direction définie par au moins un des boîtiers du rideau d'air et par l'ouverture de sortie que comprend le rideau d'air.

14. Véhicule comprenant un rideau d'air, **caractérisé en ce que** le rideau d'air est un rideau d'air selon l'une quelconque des revendications 8 à 13.
